# EUROPEAN PATENT APPLICATION

(11) **EP 4 752 615 A1**
(43) Date of publication of application: **03.06.2026**
(21) Application number: 24844461.4
(22) Date of filing: 17.06.2024
(51) Int. Cl.: G02B 6/42

(54) **SIDE-PUSH-TYPE MOUNTING AND DISMOUNTING MECHANISM AND MOUNTING METHOD THEREOF**

(30) Priority: 24.07.2023 CN 202310922969
(71) Applicant: Accelink Technologies Co., Ltd., Wuhan, Hubei 430000 (CN)
(72) Inventor: SONG, Beili, Wuhan, Hubei 430000 (CN); QUAN, Benqing, Wuhan, Hubei 430000 (CN); SHENG, Yubang, Wuhan, Hubei 430000 (CN); SUN, Hongjun, Wuhan, Hubei 430000 (CN)
(74) Representative: Frenkel, Matthias Alexander
(86) International application number: PCT/CN2024/099665
(87) International publication number: WO 2025/020766

(57) **Abstract**

Disclosed is a side-push-type mounting and dismounting mechanism and a mounting method thereof. The dismounting mechanism comprises a housing seat (1), a pull ring (2), and elastic supports (3); the pull ring (2) comprises a pair of sliding plates (21), and the sliding plates (21) are each provided with a strop arm (211); the housing seat (1) comprises two side plates (11), and a first accommodating cavity (111) is formed on the side plates (11); the sliding plate (21) may slide reciprocally relative to the two side plates (11); and the elastic supports (3) are disposed in the first accommodating cavity (111); and the stop arm (211) abuts against one side of the elastic support (3), and moves reciprocally in the first accommodating cavity (111) in conjunction with a unlocking operation process and a resetting operation process of the pull ring (2).

## Description

### CROSS-REFERENCE TO RELATED APPLICATION(S)

The present disclosure claims priority to the following patent application:
(1) China patent application with the application number of 202310922969.3 filed to China National Intellectual Property Administration on July 24, 2023, titled "SIDE-PUSH-TYPE MOUNTING AND DISMOUNTING MECHANISM AND MOUNTING METHOD THEREOF."

### TECHNICAL FIELD OF THE DISCLOSURE

The present disclosure relates to the technical field of optical module, and in particular, to a side-push-type mounting and dismounting mechanism and a mounting method thereof.

### BACKGROUND

With national strategic deployments such as the commercialization of new technologies, new infrastructure, and "East Data West Computing", such as cloud computing and big data, etc., data center traffic and bandwidth are presenting exponential growth. At present, the demand for optical modules in data centers is very large, and a rate of optical modules is upgrading from 100G to 400G and 800 G. In the technical field of optical transmission, a side-push-type mounting and dismounting mechanism is always one of mainstream mechanisms within optical modules, and generally comprises four components: a module base, a module upper cover, a pull ring, and a spring, the assembly sequence of which is firstly mounting the pull ring into the sliding chute of the base, then mounting the spring between the pull ring and the module base, and finally covering the module upper cover. In an existing side-push-type mounting and dismounting mechanism, the manners for assembling the spring mainly comprise the following three manners:

In a first manner, for example, in a patent with application number CN201310114426.2, as shown in FIG. 1, an opening is provided on the module base, and a spring through slot is provided for the spring to be put into directly downward to set the spring in the spring through slot.

In a second manner, for example, in a patent with application number CN201310191907.6, as shown in FIG. 2, a side face of a module housing is provided with a slot for accommodating the spring, a side face of a sliding rod of the pull ring is provided with an opening corresponding to a position of the slot, and the spring is squeezed in from the opening.

In a third manner, for example, in a patent with application number US12629650, as shown in FIG. 3, a top surface, a bottom surface, or both sides of the module housing are provided with a slot for accommodating the spring, and a top surface or a bottom surface of the pull ring are provided with an opening corresponding to a position of the slot, then the spring is squeezed in from the opening. When the module is assembled, the photoelectric device needs to be mounted firstly, and then the pull ring and the spring are mounted.

For the above-mentioned three manners, the spring in the first manner is extremely easy to jump out in the assembly process, and in the later maintenance stage of the optical module product, once the module upper cover is removed, the spring is also easy to jump out; after the spring in the second manner is mounted, the electromagnetic radiation generated by a photoelectric assembly in the optical module is relatively easy to leak from the opening in the side surface of the sliding rod, thereby reducing the electromagnetic compatibility of the optical module; in the third manner, the top surface, the bottom surface, or both sides of the module housing are provided with a slot for accommodating the spring, and the top surface or the bottom surface of the pull ring are provided with an opening corresponding to the position of the slot, then the spring is squeezed in from the opening, so that when the module is assembled, the photoelectric device needs to be mounted firstly, and then the pull ring and the spring are mounted, and during production or repair for the optical module, before the module upper cover is dismounted, the pull ring must be removed first, whereby the maintenance cost is high.

In view of the above, overcoming the defects existing in the prior art is an urgent problem to be solved in this technical field.

### SUMMARY

The technical problem to be solved in the present disclosure is how to solve the problems caused by poor electromagnetic compatibility, difficulty in assembling and poor maintenance, caused by spring assembly, in the side-push-type mounting and dismounting mechanism.

The present disclosure uses the following technical solutions.

In a first aspect, the present disclosure provides a side-push-type mounting and dismounting mechanism comprising a housing seat 1, a pull ring 2 and an elastic support 3,
wherein the pull ring 2 comprises a pair of sliding plates 21, and a stop arm 211 is provided on the sliding plate 21;
the housing seat 1 comprises two side plates 11, and a first accommodating cavity 111 is provided on the side plate 11;
the sliding plate 21 is slidable reciprocally relative to the two side plates 11; and the elastic support 3 is disposed within the first accommodating cavity 111, and the stop arm 211 abuts against one side of the elastic support 3, and moves reciprocally in the first accommodating cavity 111 accompanied by an unlocking operation process and a resetting operation process of the pull ring 2.

Preferably, the elastic support comprises a first elastic arm 31 and a second elastic arm 32, and a primary deformation zone with a preset angle is formed between the first elastic arm 31 and the second elastic arm 32;
wherein the second elastic arm 32 is configured to abut against the stop arm 211, and the first elastic arm 31 is configured to abut against one side of the first accommodating cavity 111.

Preferably, one end of the second elastic arm 32 sliding relative to the first accommodating cavity 111 is provided with an arc-shaped abutting surface.

Preferably, the stop arm 211 comprises a connecting arm 2111 and a stop protrusion 2112, wherein the stop arm 211 is integrally formed with the sliding plate 21 by stamping, and is performed a 180° folding process to form the connecting arm 2111, and then is folded at an end of the connecting arm 211 inwardly to form the stop protrusion 2112, then the first accommodating cavity 111 further comprises a bearing platform 1111 which is configured to bear the connecting arm 2111, and a gap formed between the bearing platform 1111 and the first accommodating cavity 111 is configured to accommodate the stop protrusion 2112.

Preferably, in a case that the elastic support 3 comprises a first elastic arm 31 and a second elastic arm 32, and a primary deformation zone with a preset angle is formed between the first elastic arm 31 and the second elastic arm 32, during the unlocking operation, the first elastic arm 31 arches towards one side of the first accommodating cavity 111, and the second elastic arm 32 arches towards one side of the bearing platform 1111.

Preferably, the elastic support 3 is formed by bending a metal dome, or the elastic support is formed by bending a cylindrical metal wire.

Preferably, a width of the metal dome 3 or a diameter of the cylindrical metal wire is adapted to a depth of the first accommodating cavity 111, wherein the depth of the first accommodating cavity 111 is a distance from a bottom surface of the first accommodating cavity 111 to an outer surface of the side plate 11.

Preferably, the housing seat 1 further comprises a bottom plate 12, and two sides of the bottom plate 12 are respectively connected to one side of the side plate 11, so as to form a third accommodating cavity 13 for bearing a photoelectric assembly.

In a second aspect, the present disclosure provides a mounting method of a side-push-type mounting and dismounting mechanism which is applicable to the side-push-type mounting and dismounting mechanism of the first aspect, wherein the mounting method comprises:
sliding the stop arm 211 from an opening of the first accommodation cavity 111 into the first accommodation cavity 111;
pushing the pull ring 2 in an axial direction of the housing seat 1 to enable the stop arm 211 to abut against a side wall of the first accommodating cavity 111; and
squeezing the elastic support 3 inwards, and pressing the elastic support 3 into the first accommodation cavity 111 when it is squeezed until a distance between two ends of the elastic support 3 is smaller than the opening of the first accommodation cavity 111.

Preferably, the method further comprises:
providing a photoelectric assembly within a third accommodating cavity 13 of the housing seat 1;
placing a housing cover 4 on the housing seat 1, inserting a first limiting protrusion 212 at a tail portion of the sliding plate 21 into a first limiting slot 114 of the housing cover 4, and abutting a second limiting protrusion 213 at the tail portion of the sliding plate 21 against a step 1141, so as to complete mounting of a housing cover 4; and
sleeving a metal shielding cage 6 on an outermost periphery after the mounting of the housing cover 4 is completed, so as to realize mounting of the mounting and dismounting mechanism.

Compared with the prior art, the beneficial effects of the embodiments of the present disclosure are as follows:
The side-push-type mounting and dismounting mechanism provided according to the present disclosure realizes the connection between the pull ring 2 and the housing seat 1 through providing a first accommodating cavity 111 in an outer wall of a side plate 11 of the housing seat 1, and providing a stop arm 211 on an inner side wall of the sliding plate 21 of the pull ring 2 in a vertical direction, and sliding into the first accommodating cavity 111 through the stop arm 211; then abutting against the stop arm 211 through the other end of the first elastic arm 31 of the elastic support 3, and abutting the other end of the second elastic arm 32 against the side wall of the first accommodating cavity 111, thereby fixing the pull ring 2 with the housing seat 1 through the elastic action of the elastic support 3. According to the present disclosure, an unlocking operation and resetting operation are performed through the pull ring 2, and the elastic support 3 will not be ejected after being mounted into the first accommodating cavity, which may effectively avoid the risk of spring ejection during the assembly process. In an embodiment of the present disclosure, the sliding plate 21 is a closing component, and after the pull ring 2 is connected to the housing seat 1, the inner wall of the sliding plate 21 is completely covered on the first accommodating cavity 111, so that a portion of the structure of the pull ring 2 that is matched with the elastic support 3 is in a fully closed state, whereby the electromagnetic compatibility is good, which can effectively avoid the problem of electromagnetic leakage. In addition, the structure in the side-push-type mounting and dismounting mechanism of the embodiments of the present disclosure is relatively simple, which is convenient for mounting and dismounting, and has low maintenance costs.

### BRIEF DESCRIPTION OF THE DRAWINGS

In order to more clearly describe the technical solutions of the embodiments of the present disclosure, the drawings required in the embodiments of the present disclosure are briefly described below. Obviously, the drawings in the following description are some embodiments of the present disclosure, and for those skilled in the art, other drawings may also be obtained according to these drawings without any inventive labor.

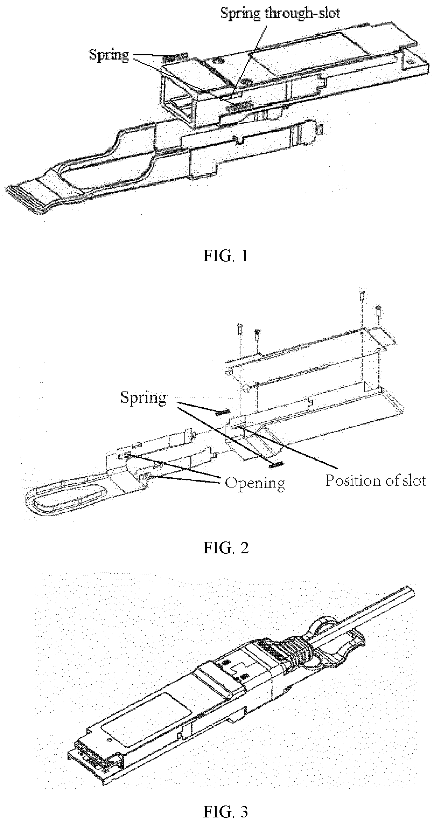

FIG. 1 is a schematic structural diagram of a first assembly manner for assembling a spring in an existing side-push-type mounting and dismounting mechanism according to the present disclosure.
FIG. 2 is a schematic structural diagram of a second assembly manner for assembling a spring in an existing side-push-type mounting and dismounting mechanism according to the present disclosure.
FIG. 3 is a schematic structural diagram of a third assembly manner for assembling a spring in an existing side-push-type mounting and dismounting mechanism according to the present disclosure.
FIG. 4 is an exploded diagram of a side-push-type mounting and dismounting mechanism according to an embodiment of the present disclosure.
FIG. 5 is a schematic structural diagram of a providing mode of a sliding plate of a side-push-type mounting and dismounting mechanism according to an embodiment of the present disclosure.
FIG. 6 is a schematic structural diagram of a providing mode of another sliding plate of a side-push-type mounting and dismounting mechanism according to an embodiment of the present disclosure.
FIG. 7 is a schematic structural diagram of a housing seat of a side-push-type mounting and dismounting mechanism according to an embodiment of the present disclosure.
FIG. 8 is a schematic diagram of applying a force to a pull ring during a dismounting process of the pull ring, an elastic support and a housing seat of a side-push-type mounting and dismounting mechanism according to an embodiment of the present invention.
FIG. 9 is a schematic structural diagram of a step of a housing set of a side-push-type mounting and dismounting mechanism according to an embodiment of the present disclosure.
FIG. 10 is a schematic structural diagram of a first perspective on an elastic support of a side-push-type mounting and dismounting mechanism according to an embodiment of the present disclosure.
FIG. 11 is a schematic structural diagram of another perspective on an elastic support of a side-push-type mounting and dismounting mechanism according to an embodiment of the present disclosure.
FIG. 12 is a schematic diagram of another providing mode of an elastic support of a side-push-type mounting and dismounting mechanism according to an embodiment of the present disclosure.
FIG. 13 is a schematic structural diagram of a side-push-type mounting and dismounting mechanism according to an embodiment of the present disclosure.
FIG. 14 is a schematic structural diagram of an elastic support, formed by bending a cylindrical metal wire, of a side-push-type mounting and dismounting mechanism according to an embodiment of the present disclosure.
FIG. 15 is a schematic structural diagram of a housing seat of a side-push-type mounting and dismounting mechanism according to an embodiment of the present disclosure.
FIG. 16 is an exploded diagram of a housing cover, a photoelectric assembly, a pull ring and a housing seat of a side-push-type mounting and dismounting mechanism according to an embodiment of the present disclosure.
FIG. 17 is a schematic structural diagram of a housing cover of a side-push-type mounting and dismounting mechanism according to an embodiment of the present disclosure.
FIG. 18 is a schematic diagram of a connection structure of a pull ring, an elastic support and a housing seat of a side-push-type mounting and dismounting mechanism according to an embodiment of the present disclosure.
FIG. 19 is a schematic structural diagram of yet another perspective on an elastic support of a side-push-type mounting and dismounting mechanism according to an embodiment of the present disclosure.
FIG. 20 is a schematic structural diagram of a metal shielding cage of a side-push-type mounting and dismounting mechanism according to an embodiment of the present disclosure.
FIG. 21 is a flow chart of a mounting method of a housing seat, a pull ring and an elastic support of a side-push-type mounting and dismounting mechanism according to an embodiment of the present disclosure.
FIG. 22 is a schematic structural diagram of an elastic support, at the just beginning to be mounted, of a side-push-type mounting and dismounting mechanism according to an embodiment of the present disclosure.
FIG. 23 is a schematic structural diagram of an elastic support, after it is mounted, of a side-push-type mounting and dismounting mechanism according to an embodiment of the present disclosure.
FIG. 24 is a flow chart of a mounting method of a housing cover, a photoelectric assembly and a metal shielding cage of a side-push-type mounting and dismounting mechanism according to an embodiment of the present disclosure.

Here, list of reference signs are as follows:
1-housing seat
11-side plate
111-first accommodating cavity
1111-bearing platform
1112-stopping wall
1113-opening
112-second accommodating cavity
113-first elongated slot
114-first limiting slot
1141-step
12-bottom plate
13-third accommodating cavity
2-pull ring
21-sliding plate
211-stop arm
2111-connecting arm
2112-stop protrusion
212-first limiting protrusion
213-second limiting protrusion
214-unlocking protrusion
215-stop surface
22-handle
3-elastic support
31-first elastic arm
32-second elastic arm
33-first roll edge
34-second roll edge
35-inflection point region
4-housing cover
41-second elongated slot
42-second limiting slot
43-fourth accommodating cavity
44-locking surface
5-photoelectric assembly
6-metal shielding cage

### DETAILED DESCRIPTION

In order to make the objectives, technical solutions and advantages of the present disclosure clearer, the present disclosure will be further described in detail below with reference to the drawings and embodiments. It should be understood that the specific embodiments described herein are only used to explain the present disclosure and are not intended to limit the present disclosure.

In the description of the present disclosure, the orientation or position relationship indicated by the terms " inner ", "outer", "longitudinal", "lateral", "upper", "lower", "top", "bottom" and the like is based on the orientation or positional relationship shown in the drawings, which is only for the purpose of describing the present disclosure rather than requiring the present disclosure must be constructed and operated in a specific orientation, and therefore, which should not be understood as a limitation to the present disclosure.

In addition, the technical features involved in various embodiments of the present disclosure described below can be combined with each other as long as they do not conflict with each other.

### Embodiment 1

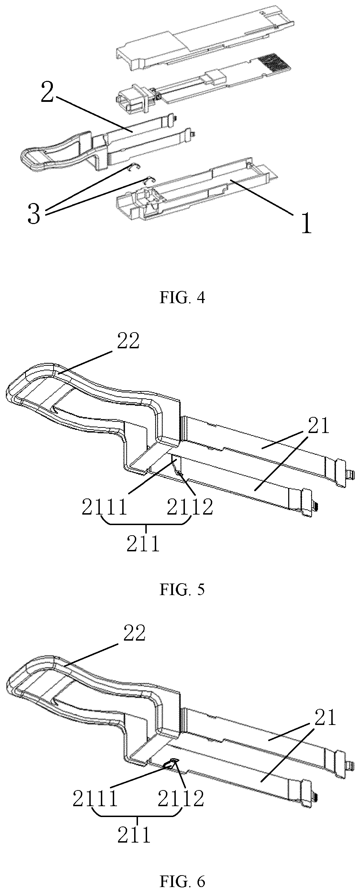

Embodiment 1 of the present disclosure provides a side-push-type mounting and dismounting mechanism which, as shown in FIG. 4, comprises a housing seat 1, a pull ring 2 and an elastic support 3.

As shown in FIGS. 5 and 6, the pull ring 2 comprises a pair of sliding plates 21, and a stop arm 211 is provided on the sliding plate 21.

As shown in FIG. 5, in an embodiment of the present disclosure, the pull ring 2 comprises a pair of sliding plates 21, and a stop arm 211 is provided on the sliding plate 21. It should be noted that, as shown in FIGS. 5 and 6, in an embodiment of the present disclosure, the orientation of the stop arm 211 may be provided from top to bottom (see what is shown in FIG. 5), or may be provided from bottom to top (see what is shown in FIG. 6), which is specifically set according to actual situations. In a specific application scene, the pull ring 2 of an embodiment of the present disclosure comprises a pair of sliding plates 21, which may, but is not limited to, provide a stop arm 211 on an inner side of one sliding plate 21, and preferably, a stop arm 211 is provided on each inner side of the pair of sliding plates 21; in order to achieve better anti-magnetic properties, the corresponding stop arm 211 and sliding plate 21 are integrally formed by stamping, and a structural state as shown in FIG. 5 is formed through a 180° folding process; however, as an optional implementation solution of an embodiment of the present disclosure, the corresponding stop arm 211 may also be fixed to the inner surface of the sliding plate 21 through separate welding (preferably laser welding).

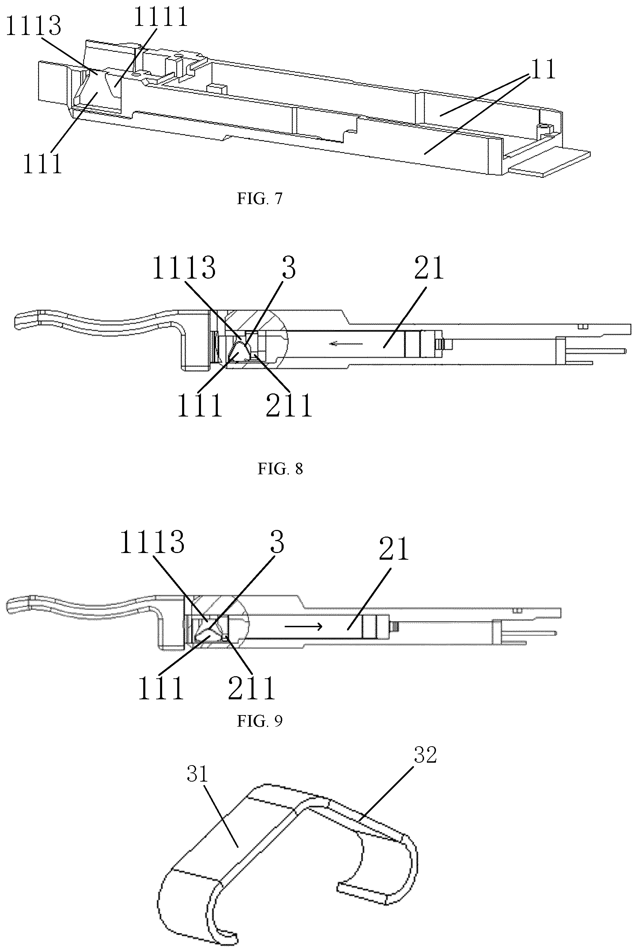

As shown in FIG. 7, the housing seat 1 comprises two side plates 11, and a first accommodating cavity 111 is provided in the side plate 11.

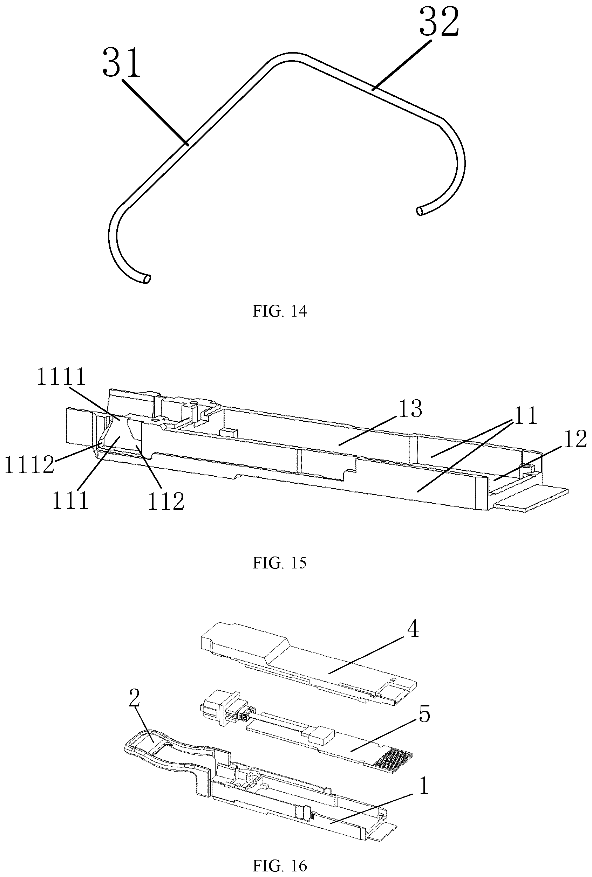

The stop arm 211 and the elastic support 3 are disposed within the first accommodation cavity 111. One end of the elastic support 3 abuts against the stop arm 211, and the other end of the elastic support 3 abuts against a side wall of the first accommodation cavity 111. In order to facilitate the other end of the elastic support 3 (first elastic arm 31) abutting against the side wall of the first accommodating cavity 111, in an embodiment of the present disclosure, a stopping wall 1112 (see FIG. 15) is provided in a place where the first accommodating cavity 111 abuts against the other end of the elastic support 3 (first elastic arm 31), and the connection between the elastic support 3 and the first accommodating cavity 111 is made to be more stable due to the providing of the stopping wall 1112. As shown in FIGS. 8 and 9, the sliding plate 21 may slide reciprocally relative to the two side plates 11; and the elastic support 3 is disposed within the first accommodating cavity 111, and the stop arm 211 abuts against one side of the elastic support 3, and moves reciprocally in the first accommodating cavity 111 in conjunction with a unlocking operation process and a resetting operation process of the pull ring 2.

As shown in FIGS. 8 and 9, in an embodiment of the present disclosure, a first accommodating cavity 111 is provided in an outer wall of the side plate 11 of the housing seat 1, and a stop arm 211 is provided on an inner side wall of the sliding plate 21 of the pull ring 2 in a vertical direction. The stop arm 211 slides into the first accommodating cavity 111 to realize the connection between the pull ring 2 and the housing seat 1. Then a side wall of one side of the elastic support 3 abuts against the stop arm 211. As shown in FIG. 8, when the pull ring 2 is used for unlocking, the pull ring 2 is pulled, applying a force to the elastic support 3 through the stop arm 211 of the pull ring 2, and the elastic support 3 is compressed, thereby realizing the unlocking for the side-push-type mounting and dismounting mechanism according to an embodiment of the present disclosure. When a device inside the side-push-type mounting and dismounting mechanism of an embodiment of the present disclosure needs to be maintained, the elastic support is compressed by using the pull ring 2, so that the sliding plate 21 of the pull ring 2 is unlocked from the housing seat 1, and the compressed elastic support 3 is taken out, and then after the stop arm 211 loses the clamping action of the elastic support 3, the pull ring 2 is taken out, thereby realizing the separation of the pull ring 2, the housing seat and the elastic support 3. As shown in FIG. 9, in the process of mounting, the pull ring 2 and the housing seat 1 are assembled firstly, and the stop arm is ensured to be disposed inside the first accommodating cavity 111, then the elastic support 3 is compressed to slide the elastic support 3 into the first accommodating cavity 111, so that the elastic support 3 abuts against the stop arm 211. In the process that the elastic support 3 is disposed in the first accommodating cavity 111, the elastic support 3 is reset, and through the elastic action of the elastic support 3, it is ensured that the elastic support 3 is always abutted against the stop arm 211, thereby ensuring that the pull ring 2 and the housing seat 1 are fixed relative to each other. It should be noted that, in an embodiment of the present disclosure, in order to facilitate the mounting of the elastic support 3, an opening 1113 is provided above the first accommodating cavity, then when it is needed to mount the elastic support 3, the elastic support 3 is compressed and is slid into the first accommodation cavity 111 from the opening 1113, thereby realizing the mounting of the elastic support 3; and when it is needed to dismount the elastic support 3, the pull ring 2 is pulled to compress the elastic support 3, and then the elastic support 3 is taken out from the opening 1113, thereby realizing the dismount of the elastic support 3.

In the present disclosure, the elastic support 3 will not be ejected after being mounted into the first accommodating cavity 111, which may effectively avoid the risk of spring ejection during the assembly process. In the embodiments of the present disclosure, the sliding plate 21 is provided as a closed setting, and after the pull ring 2 is connected to the housing seat 1, the inner wall of the sliding plate 21 completely covers the first accommodating cavity 111, so that a partial structure of the pull ring 2 that is matched with the elastic support 3 is in a fully closed state, and the electromagnetic compatibility is good, which can effectively avoid the problem of electromagnetic leakage. In addition, the structure of the side-push-type mounting and dismounting mechanism according to the embodiments of the present disclosure is relatively simple, which is convenient for mounting and dismounting, and has low maintenance costs.

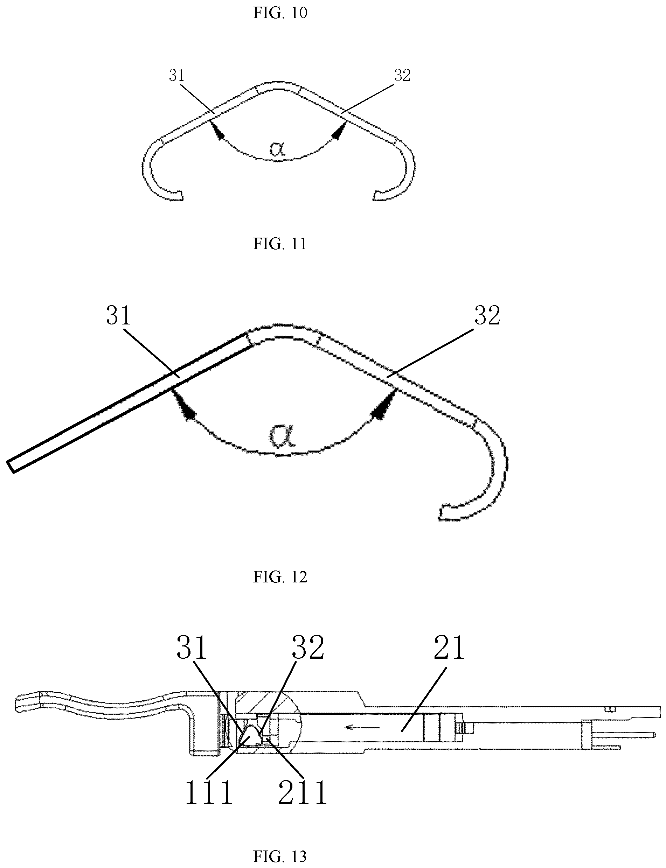

In order to describe the complete solution of the present disclosure, specific details of the present disclosure will be explained in detail below. Further, as shown in FIGS. 10 and 11, the elastic support 3 comprises a first elastic arm 31 and a second elastic arm 32, and a primary deformation zone with a preset angle is formed between the first elastic arm 31 and the second elastic arm 32, wherein the second elastic arm 32 configured to abut against the stop arm 211, and the first elastic arm 31 is configured to abut against one side of the first accommodating cavity 111; and in the unlocked state, influenced by the promoting effect of the stop arm 211 along with the translation of the pull ring 2, the second elastic arm 31 draws close to the first elastic arm 31, thereby reserving the rebound force required for the pull ring 2 to reset.

As shown in FIGS. 10 and 11, the elastic support 3 comprises a first elastic arm 31 and a second elastic arm 32, and a primary deformation zone with a preset angle is formed between the first elastic arm 31 and the second elastic arm 32. Specifically, in an embodiment of the present disclosure, the preset angle formed between the first elastic arm 31 and the second elastic arm 32 is set according to actual situations, and the preset angle (see angle α in FIG. 11) of an embodiment of the present disclosure is a natural angle of the connection between the first elastic arm 31 and the second elastic arm 32. When a force is applied to the first elastic arm 31 and the second elastic arm 32, the preset intersection angle of the primary deformation zone between the first elastic arm 31 and the second elastic arm 32 changes, so that a distance between the first elastic arm 31 and the second elastic arm 32 changes. After the elastic support 3 of an embodiment of the present disclosure is disposed within the first accommodating cavity 111, the elastic support 3 is in a compressed state (at this time, the intersection angle between the first elastic arm 31 and the second elastic arm 32 of the elastic support 3 is less than the angle α), thereby ensuring that the pull ring 2 and the housing seat 1 are fixed relative to each other through the elastic action of the elastic support 3.

As shown in FIGS. 10 to 12, one end of the second elastic arm 32 sliding relative to the first accommodating cavity 111 is provided with an arc-shaped abutting surface (not shown in FIGS. 10 to 12).

As shown in FIGS. 10 to 12, after the elastic support 3 is mounted to the first accommodating cavity 111, the second elastic arm 32 abuts against the stop arm 211 of the pull ring 2, and through the arc-shaped abutting surface provided on the second elastic arm 32, it is convenient for the pull ring 2 to be able to better abut against the second elastic arm 32 through the stop arm 211, and then the elastic support 3 can be more easily compressed through the stop arm 211, so that the elastic support 3 can be prevented from being damaged. It should be noted that, in an embodiment of the present disclosure, the elastic support 3 comprises a first elastic arm 31 and a second elastic arm 32, and after the elastic support 3 is mounted to the first accommodating cavity 111, the first elastic arm 31 always abuts against the side wall of the first accommodating cavity 111. In the process that the elastic support 3 is compressed or reset along the housing base 1 in the axial direction, it can be considered that the first elastic arm 31 is always in a relatively static state with the side wall of the first accommodating cavity 111. Therefore, in an embodiment of the present disclosure, according to actual situations, the first elastic arm 31 can be provided as the same as the second elastic arm 32, and one end of the first elastic arm 31 is provided with an arc-shaped abutting surface (see FIGS. 10 and 11, which is not shown in the drawings), whereby it is convenient for the first elastic arm 31 to be able to better abut against the side wall of the first accommodating cavity 111; and it is also possible to not process the first elastic arm 31, and after the elastic support 3 is mounted to the first accommodating cavity 111, it is enough to only ensure that the first elastic arm 31 may always remain a relatively static state with the side wall of the first accommodating cavity 111 (see FIG. 12).

As shown in FIGS. 5 and 7, the stop arm 211 comprises a connecting arm 2111 and a stop protrusion 2112, wherein the stop arm 211 is integrally formed together with the sliding plate 21 by stamping, and is performed a 180° folding process to form the connecting arm 2111, and an end of the connecting arm 2111 is folded inwards to form the stop protrusion 2112. In this way, a bearing platform 1111 is further comprised in the first accommodating cavity 111 and is configured to bear the connecting arm 2111, and a gap formed between the bearing platform 1111 and the first accommodating cavity 111 is configured to accommodate the stop protrusion 2112.

As shown in FIGS. 5 and 7, in an embodiment of the present disclosure, the stop arm 211 comprises a connecting arm 2111 and a stop protrusion 2112, and the first accommodating cavity is further provided with a bearing platform 1111. When the pull ring 2 slides into the first accommodating cavity 111 through the stop arm 211, the connecting arm 2111 is placed on the bearing platform 1111. In the process of compressing and resetting of the elastic support 3, the bearing platform 1111 always keeps still, and the connecting arm 2111 moves relative to the bearing platform 1111 in dislocation. It should be noted that, in an embodiment of the present disclosure, for the mounting mode of the stop arm 211, in addition to providing the stop arm 211 according to the mode of FIG. 5 (the orientation of the stop arm 211may be set from top to bottom), the stop arm may also be provided according to the mode of FIG. 6 (the orientation of the stop arm 211may be set from bottom to top), i.e., it is provided according to actual situations, and both may, but is not limited to, adopt a mode of integrally formed by stamping, and then the connecting arm 2111 is formed through a 180° folding process, the stop protrusion 2112 being formed through being folded inwards at the end of the connecting arm 2111, the details of which are not described herein again since the elaboration have been performed in the above-mentioned description.

As shown in FIG. 13, when the elastic support 3 comprises a first elastic arm 31 and a second elastic arm 32 and a primary deformation zone with a preset angle is formed between the first elastic arm 31 and the second elastic arm 32, during the unlocking process, the first elastic arm 31 arches towards one side of the first accommodating cavity 111 (see FIG. 13), and the second elastic arm 32 arches towards one side of the bearing platform (see FIG. 13), wherein the remained subject area after the bearing platform is removed from the first accommodating cavity 111 constitutes a deformation and restoration space region of the elastic support 3.

As shown in FIGS. 10 and 14, in an embodiment of the present disclosure, the elastic support 3 is formed by bending a metal dome; alternatively, the elastic support 3 is formed by bending a cylindrical metal wire. As shown in FIG. 10, in an embodiment of the present disclosure, the elastic support 3 may be formed by bending a metal dome; as shown in FIG. 14, in an embodiment of the present disclosure, the elastic support 3 may also formed by bending a cylindrical metal wire. In a specific application scene, according to an embodiment of the present disclosure, a width of the metal dome or a diameter of the cylindrical metal wire is adapted to a depth of the first accommodating cavity 111, wherein the depth of the first accommodating cavity 111 is a distance from a bottom surface of the first accommodating cavity 111 to an outer surface of the side plate 11.

As shown in FIG. 15, an inner side wall of the first accommodating cavity 111 extends in the axial direction of the housing seat 1 and is provided with a second accommodating cavity 112, and the stop arm 211 is accommodated within the second accommodating cavity 112. In an embodiment of the present disclosure, the second accommodating cavity 112 may actually be considered as a part of the first accommodating cavity 111. In order to distinguish the providing position of the connecting arm 2111, the stop protrusion 2112 and the elastic support 3, in an embodiment of the present disclosure, the first accommodating cavity 111 is artificially divided into a small part region as the second accommodating cavity 112; and it can be understood that after the connecting arm 2111, the stop arm 211, and the elastic support 3 are disposed in the first accommodating cavity 111, the space occupied by the connecting arm 2111 and the stop arm 211 in the first accommodating cavity 111 is the second accommodating cavity 112.

Other structures of the side-push-type mounting and dismounting mechanism according to an embodiment of the present disclosure are described next. As shown in FIGS. 15 and 16, in an embodiment of the present disclosure, the housing seat 1 further comprises a bottom plate 12, and two sides of the bottom plate 12 are respectively connected to one side of the side plate 11, so as to form a third accommodating cavity 13 for bearing a photoelectric assembly 5. In an embodiment of the present disclosure, the photoelectric assembly 5 of is provided within the third accommodating cavity 13, and through fastening a housing cover 4, the photoelectric assembly 5 is encapsulated within the third receiving cavity 13, and the assembly between the photoelectric assembly 5 and other components (for example, the housing cover 4, the housing seat 1, the pull ring 2, and the elastic support 3) in the mounting and dismounting mechanism is relatively independent, which is easy to be disassembled and assembled and has low maintenance costs. In order to clamp the photoelectric assembly 5 within the third containment cavity 13, in an embodiment of the present disclosure, an accommodating cavity 43 is provided in the housing cover 4, and when the housing cover 4 is fastened to the housing seat 1, the fourth accommodating cavity 43 is exactly matched with the third accommodating cavity 13, so as to provide the photoelectric assembly 5 between the third accommodating cavity 13 and the fourth accommodating cavity 43.

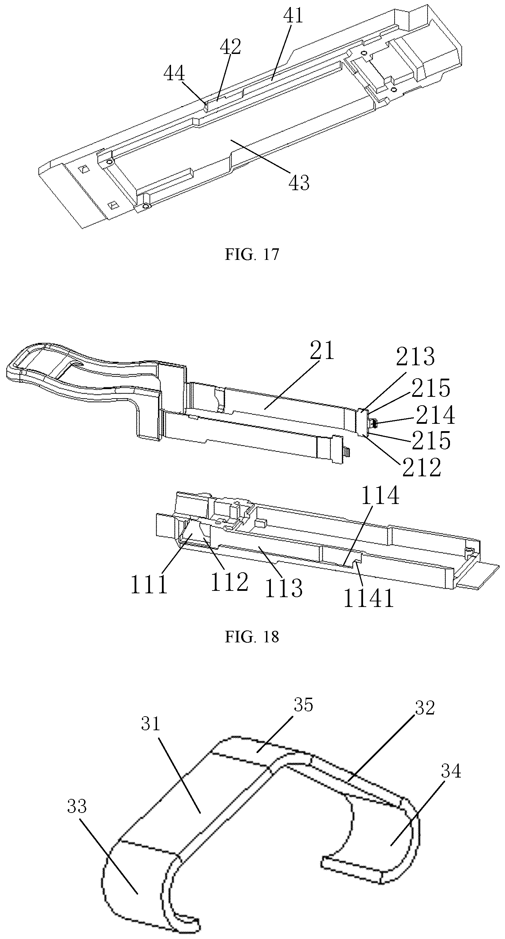

In order to realize the connection between the pull ring 2, the housing cover 4 and the housing seat 1, according to an embodiment of the present disclosure, as shown in FIGS. 17 and 18, the middle of an outer side wall of the side plate 11 is provided with a first elongated slot 113 and a first limiting slot 114 in the axial direction, wherein one end of the first elongated slot 113 is connected with the first accommodating cavity 111, and the other end of the first elongated slot 113 is provided with the first limiting slot 114;
a tail portion of the sliding plate 21 is provided with a first limiting protrusion 212 which is matched with the first limiting slot 114; and the first limiting protrusion 212 is disposed within the first limiting slot 114 of the housing seat 1.

In addition, in an embodiment of the present disclosure, the side-push-type mounting and dismounting mechanism further comprises a housing cover 4, and a side of the housing cover 4 is provided with a second elongated slot 41 and a second limiting slot 42, wherein one end of the second elongated slot 41 is provided with the second limiting slot 42. The first elongated slot 113 is matched with the second elongated slot 41. The tail portion of the sliding plate 21 is provided with a second limiting protrusion 213 in the direction opposite to the first limiting protrusion 212, and the second limiting protrusion 213 is disposed within the second limiting slot 42 of the housing cover 4. An end surface of the sliding plate 21 abuts against side walls of the step 1141 and the first limiting slot 114, respectively, and the inner wall of the sliding plate 21 is attached with inner walls of the first elongated slot 113 and the second elongated slot 41, whereby it is convenient for the pull ring 2 to be clamped between the housing cover 4 and the housing seat 1.

As shown in FIGS. 17 and 18, in an embodiment of the present disclosure, a first elongated slot 113 is provided on the housing seat 1, and a second elongated slot 41 is provided on the housing cover 4, the first elongated slot 113 being matched with the second elongated slot 41. After the housing cover 4 is assembled with the housing seat 1, the first elongated slot 113 is connected with the second elongated slot 41 to form a complete slot (see FIGS. 17 and 18), wherein the first elongated slot 113 is located in the housing seat 1, and the second elongated slot 41 is located in the housing cover 4. After the pull ring 2, the housing cover 4 and the housing seat 1 are connected with each other, the inner wall of the sliding plate 21 of the pull ring 2 can just be disposed within the complete slot formed by the first elongated slot 113 and the second elongated slot 41. A first limiting slot 114 is provided on the housing seat 1, and a second limiting slot 42 is provided on the housing cover 4, the first limiting slot 114 being matched with the second limiting slot 42. After the pull ring 2, the housing cover 4 and the housing seat 1 are connected with each other, the first limiting protrusion 212 at the tail portion of the sliding plate 21 can just be inserted into the first limiting slot 114, and the second limiting protrusion 213 can just be inserted into the second limiting slot 42, and then the stop arm 211 of the pull ring 2 is fixed through the elastic support 3, and an end portion of the sliding plate 21 abuts against the corresponding side walls of the first limiting slot 114 and the second limiting slot 42 through the elastic action of the elastic support 3, whereby the pull ring 2, the housing seat 1 and the housing cover 4 are connected with each other. In addition, in an embodiment of the present disclosure, in order to facilitate unlocking, a length of the first limiting slot 114 is longer than that of the first limiting protrusion 212, and a length of the second limiting slot 42 is longer than that of the second limiting protrusion 213. As shown in FIG. 8, an arrow indicates a force applying direction to the pull ring 2, and when unlocking and dismounting are required, the elastic support 3 is further compressed through pulling the pull ring 2, the first limiting protrusion 212 of the sliding plate 21 is moved along the first limiting slot 114, and the second limit protrusion 213 is moved along the second limit slot 42, so that the end portion of the sliding plate 21 does not abut against the corresponding side walls of the first limiting slot 114 and the second limiting slot 42. The housing cover 4 will not be subjected to a force caused by abutting against by the pull ring 2 at this time, so that the housing cover 4 can be easily dismounted, and after the dismounting of the housing cover 4 is completed, when the elastic support 3 is compressed until it can be taken out from the opening 1113 of the first accommodating cavity 111, the elastic support 3 is taken out, and finally, the stop arm 211 of the pull ring 2 is slid out from the opening 1113 of the first accommodating cavity 111; that is, the disassembly between the pull ring 2, the housing cover 4 and the housing seat 1 are completed. It should be noted that, in an embodiment of the present disclosure, the lengths of the first limiting slot 114, the second limiting slot 42, the first limiting protrusion 212 and the second limiting protrusion 213 are set according to actual situations. It should be noted that, in an embodiment of the present disclosure, the first limiting slot 114 and the second limiting slot 42 are actually extended in the vertical direction, i.e. the slotting is performed in the side wall of the side plate 11 of the housing seat 1 in the vertical direction, so that the first limiting protrusion 212 can be clamped into the first limiting slot 114, and the second limiting protrusion 213 can be clamped into the second limiting slot 42.

In order to better limit the sliding plate 21, as shown in FIG. 9, in an embodiment of the present disclosure, the first limiting protrusion 212 is provided with a unlocking protrusion 214, and the first limiting slot 114 is provided with a step 1141, wherein the unlocking protrusion 214 is provided on the step 1141, and the end surface of the sliding plate 21 abuts against side walls of the step 1141 and the first limiting slot 114, respectively, so as to limit the sliding plate 21. During actually mounting the pull ring 2, two stop surfaces 215 are provided at the end portion of the sliding plate 21 (see FIG. 18), and are symmetrically disposed with the unlocking projection 214 as the center, wherein the stop surface 215 located below abuts against a side surface of the step 1141, and the top stop 215 located above abuts against a locking surface 44 (see FIGS. 17 to 18, and the locking surface 44 is actually a side wall of the second elongated slot 41) provided on the second elongated slot 41 of the housing cover 4. Through the limiting effect of the stop surface 215, the pull ring 2 is realized to be mounted on the housing seat 1. In addition, when unlocking is performed, the unlocking protrusions 214 on both sides (the unlocking protrusions 214 on both sides are symmetrically provided, see FIG. 18) are pressed with fingers, and then a force (see the arrow in FIG. 8 or FIG. 13, the direction of the arrow indicates the direction of force application at the unlocking) is applied to the pull ring in the direction opposite to the mounting, thereby realizing unlocking; and in order to facilitate unlocking, an embodiment of the present disclosure preferably provides textures for increasing friction on the unlocking protrusion 214 (see FIG. 18, which is not shown in FIG. 18).

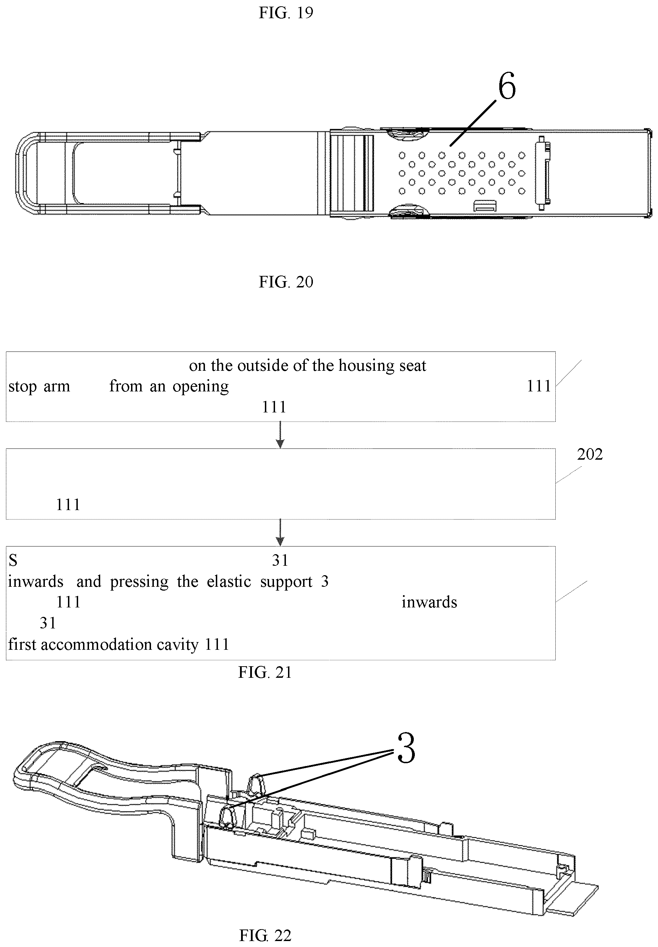

As shown in FIG. 19, in an embodiment of the present disclosure, one end of the first elastic arm 31 of the elastic support 3 is elastically connected to one end of the second elastic arm 32 at a preset angle, and when the other end of the first elastic arm 31 and the other end of the second elastic arm 32 are relatively sharp, the other end of the first elastic arm 31 and the other end of the second elastic arm 32 will be worn by pulling the pull ring 2 for a long time, thereby affecting the life of the elastic support 3. Based on this, in an embodiment of the present disclosure, the first elastic arm 31 is provided with a first roll edge 33, and the second elastic arm 32 is provided with a second roll edge 34, wherein a side wall of the first roll edge 33 abuts against the stop arm 211, and a side wall of the first roll edge 33 abuts against the side wall of the first accommodating cavity 111. The end portions of the elastic support 3 are provided to be arc-shaped, so that the friction applied to the elastic support 3 is smaller during compression, so that the life of the elastic support 3 is longer. In addition, in an embodiment of the present disclosure, in order to make the service life of the elastic support 3 longer, the connection between the first elastic arm 31 and the second elastic arm 32 is provided with a smooth inflection point region 35, i.e., a gradual bend section (see FIG. 19), and through the inflection point region 35, the connection between the first elastic arm 31 and the second elastic arm 32 is smoother.

In order to better avoid electromagnetic leakage generated by the photoelectric assembly 5 mounted inside the side-push-type mounting and dismounting mechanism of the embodiments of the present disclosure, as shown in FIG. 20, a metal shielding cage 6 is comprised. The metal shielding cage 6 is sleeved at the first accommodating cavity 111 of the mounting and dismounting mechanism to reduce electromagnetic radiation. In the embodiments of the present disclosure, by providing the metal shielding cage 6, the problem of electromagnetic leakage can be effectively reduced using the electromagnetic effect of the metal shielding cage 6. In addition, in order to facilitate the disassembly and assembly of the side-push-type mounting and dismounting mechanism of the embodiments of the present disclosure, in an embodiment of the present disclosure, a handle 22 is provided on the pull ring 2 (see FIGS 5 and 6), so as to apply a force to the pull ring 2. When the assembly is required, the stop arm 211 slides into the first accommodation cavity 111, then the handle 22 of the pull ring 2 is pushed, so that the stop arm 211 abuts against the second accommodation cavity 112, and then the elastic support 3 is mounted within the first accommodation cavity 111. When the unlocking is required, the pull ring 2 is pulled to unlock. For the entire assembly and unlocking process, the elaboration have been performed in the above-mentioned description, and details are not described herein again.

The elastic support 3 of the present disclosure will not eject after being mounted into the first accommodating cavity 111, which may effectively avoid the risk of spring ejection during the assembly process. In the embodiments of the present disclosure, the sliding plate 21 is provided as a closed setting, and after the pull ring 2 is connected to the housing seat 1, the inner wall of the sliding plate 21 is completely covered on the first accommodating cavity 111, so that a portion of the pull ring 2 that is matched with the elastic support 3 is in a fully closed state, whereby the electromagnetic compatibility is good and can effectively avoid the problem of electromagnetic leakage. In addition, the structure of the side-push-type mounting and dismounting mechanism of the embodiments of the present disclosure is relatively simple, which is convenient for mounting and dismounting, and has low maintenance costs.

### Embodiment 2

Concerning Embodiment 2 of the present disclosure, the embodiments of the present disclosure further provide a mounting method of a side-push-type mounting and dismounting mechanism, as shown in FIG. 21, comprising:
Step 201: sliding the stop arm 211 from an opening 1113 of the first accommodation cavity 111 into the first accommodation cavity 111.

In the embodiments of the present disclosure, in the process of assembly, the pull ring 2 and the housing seat 1 are assembled firstly, and the stop arm 211 of the sliding plate 21 are slid into the first accommodating cavity 111 along the opening 1113 of the first accommodating cavity 111 in the vertical direction.

Step 202: pushing the pull ring 2 in an axial direction of the housing seat 1 to enable the stop arm 211 to abut against the side wall of the first accommodating cavity 111.

After the stop arm 211 slides into the first accommodation cavity 111, the handle 22 of the pull ring 2 is pushed, so that the stop arm 211 abuts against the side wall of the second accommodation cavity 112. At this time, the connecting arm 2111 of the stop arm 211 is placed exactly on the bearing platform 1111, and the stop protrusion 2112 of the stop arm 211 abuts against the side wall of the elastic support 3, so that the pull ring 2 is clamped on the housing set.

Step 203: squeezing the elastic support 3 inwards, and pressing the elastic support 3 into the first accommodation cavity 111 when it is squeezed until a distance between the two ends of the elastic support 3 is smaller than the opening of the first accommodation cavity 111.

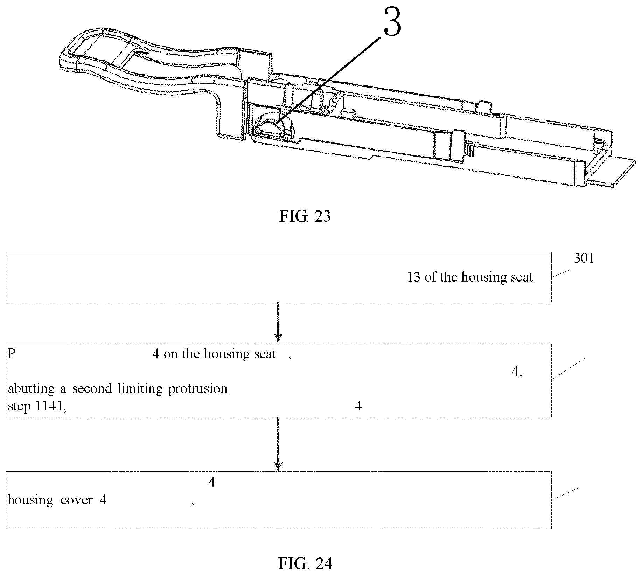

FIGS. 22 and 23 show a state change process of the assembly process of the elastic support 3. As shown in FIGS. 22 and 23, after the pull ring 2 is connected to the housing seat 1, the elastic support 3 is compressed, so that the elastic support 3 can be smoothly inserted into the first accommodating cavity from the opening 1113 of the first accommodating cavity 111 in the vertical direction, and after the elastic support 3 is inserted into the position corresponding to the first accommodating cavity 111, the elastic support 3 loses the compressed force. At this time, the elastic support 3 is rebound, so that the other end of the first elastic arm 31 of the elastic support 3 abuts against the stop arm 211, and the other end of the second elastic arm 32 abuts against the side wall of the first accommodating cavity 111, thereby realizing the connection between the pull ring 2 and the housing seat 1.

The side-push-type mounting and dismounting mechanism of an embodiment of the present disclosure further comprises a housing cover 4, a photoelectric assembly 5 and a metal shielding cage 6, and thus an embodiment of the present disclosure further comprises the mounting of the housing cover 4, the photoelectric assembly 5 and the metal shielding cage 6, as shown in FIG. 24, specifically comprising:
Step 301: providing a photoelectric assembly in a third accommodating cavity 13 of the housing seat 1.

In an embodiment of the present disclosure, the photoelectric assembly 5 is provided within the third accommodating cavity 13 of the housing seat 1. In the process of assembling the photoelectric assembly 5, firstly, the pull ring 2 is mounted on the housing seat 1, and then the photoelectric assembly 5 is mounted in the third accommodating cavity 13 in the housing seat 1, and finally, the connection between the housing cover 4 and the housing seat 1 is used to realize fixing the photoelectric assembly 5 within the third accommodating cavity 13.

Step 302: placing a housing cover 4 on the housing seat 1, inserting a first limiting protrusion 212 at a tail portion of the sliding plate 21 into a first limiting slot 114 of the housing cover 4, and abutting a second limiting protrusion 213 at a tail portion of the sliding plate 21 against a step 1141, so as to complete mounting of the housing cover 4.

In an embodiment of the present disclosure, the housing cover 4 is connected with the housing seat 1 through the pull ring 2, and after the pull ring 2 is connected with the housing seat 1, the first limiting protrusion 212 at the tail portion of the sliding plate 21 is inserted into the first limiting slot 114 of the housing cover 4, so that the housing cover 4 is connected with the housing seat 1 through the function of the pull ring 2.

Step 303: sleeving a metal shielding cage 6 on an outermost periphery after the mounting of the housing cover 4 is completed, so as to realize mounting of mounting and dismounting mechanism.

After the assembly for the housing cover 4, the pull ring 2, the elastic support 3, the photoelectric assembly 5 and the housing seat 1 is completed, the mounting of the mounting and dismounting mechanism is realized through sleeving the metal shielding cage 6 on the outermost periphery, wherein the photoelectric assembly 5 generates electromagnetic signals in the process of operation, and the metal shielding cage 6 has an electromagnetic shielding effect, which can further reduce the leakage of the electromagnetic signal.

The foregoing embodiments are merely preferred embodiments of the present disclosure, and are not intended to limit the present disclosure, and any modifications, equivalent replacements, improvements, etc. made within the spirit and principles of the present disclosure shall be included within the scope of protection of present disclosure.

## Claims

1. A side-push-type mounting and dismounting mechanism, **characterized in** comprising a housing seat (1), a pull ring (2) and elastic supports (3);
wherein the pull ring (2) comprises a pair of sliding plates (21), and a stop arm (211) is provided on the sliding plate (21);
the housing seat (1) comprises two side plates (11), and a first accommodating cavity (111) is formed in the side plates (11); and
the sliding plate (21) is slidable reciprocally relative to the two side plates (11); and the elastic support (3) is disposed within the first accommodating cavity (111), and the stop arm (211) abuts against one side of the elastic support (3), and moves reciprocally in the first accommodating cavity (111) in conjunction with a unlocking operation process and a resetting operation process of the pull ring (2).

2. The side-push-type mounting and dismounting mechanism of claim 1, **characterized in that** an orientation of the stop arm (211) is provided from top to bottom, or is provided from bottom to top.

3. The side-push-type mounting and dismounting mechanism of claim 1, **characterized in that** the stop arm (211) is provided on an inner side of one sliding plate (21), or the stop arm (211) is provided on each inner side of the pair of sliding plates (21).

4. The side-push-type mounting and dismounting mechanism of claim 1, **characterized in that** the stop arm (211) is integrally formed with the sliding plate (21) by stamping, and is manufactured through a 180° folding process; or, the stop arm (211) is fixed to an inside surface of the sliding plate (21) through separate welding.

5. The side-push-type mounting and dismounting mechanism of claim 1, **characterized in that** an inner side wall of the first accommodating cavity (111) extends in an axial direction of the housing seat (1) and is provided with a second accommodating cavity (112), and the stop arm (211) is accommodated within the second accommodating cavity (112).

6. The side-push-type mounting and dismounting mechanism of claim 1, **characterized in that** the elastic support comprises a first elastic arm (31) and a second elastic arm (32); and a primary deformation zone with a preset angle is formed between the first elastic arm (31) and the second elastic arm (32);
wherein the second elastic arm (32) is configured to abut against the stop arm (211), and the first elastic arm (31) is configured to abut against one side of the first accommodating cavity (111).

7. The side-push-type mounting and dismounting mechanism of claim 6, **characterized in that** a stopping wall (1112) is provided in a place where the first accommodating cavity (111) abuts against the other end of the first elastic arm (31), enabling the elastic support (3) to be more stably connected to the first accommodating cavity (111).

8. The side-push-type mounting and dismounting mechanism of claim 6, **characterized in that** one end of the second elastic arm (32) that slides relative to the first accommodating cavity (111) is provided with an arc-shaped abutting surface.

9. The side-push-type mounting and dismounting mechanism of claim 1, **characterized in that** the stop arm (211) comprises a connecting arm (2111) and a stop protrusion (2112), wherein the stop arm (211) is integrally formed with the sliding plate (21) by stamping and forms the connecting arm (2111) through a 180° folding process, and then folds inwards at an end of the connecting arm (2111) to form the stop protrusion (2112), then the first accommodating cavity (111) further comprises a bearing platform (1111) which is configured to bear the connecting arm (2111), and a gap formed between which and the first accommodating cavity (111) is configured to accommodate the stop protrusion (2112).

10. The side-push-type mounting and dismounting mechanism of claim 9, **characterized in that** in a case that the elastic support (3) comprises a first elastic arm (31) and a second elastic arm (32) and a primary deformation zone with a preset angle is formed between the first elastic arm (31) and the second elastic arm (32), during an unlocking process, the first elastic arm (31) arches towards one side of the first accommodating cavity (111), and the second elastic arm (32) is arched towards one side of the bearing platform (1111).

11. The side-push-type mounting and dismounting mechanism of any one of claims 1 to 10, **characterized in that** the elastic support (3) is formed by bending a metal dome, or the elastic support is formed by bending a cylindrical metal wire.

12. The side-push-type mounting and dismounting mechanism of any one of claims 1 to 10, **characterized in that** a width of the metal dome (3) or a diameter of the cylindrical metal wire is adapted to a depth of the first accommodating cavity (111), wherein the depth of the first accommodating cavity (111) is a distance from a bottom surface of the first accommodating cavity (111) to an outer surface of the side plate (11).

13. The side-push-type mounting and dismounting mechanism of any one of claims 1 to 10, **characterized in that** the housing seat (1) further comprises a bottom plate (12), and two sides of the bottom plate (12) are respectively connected to one side of the side plate (11), so as to form a third accommodating cavity (13) for bearing a photoelectric assembly.

14. A mounting method of a side-push-type mounting and dismounting mechanism, **characterized in that** the mounting method is applicable to the side-push-type mounting and dismounting mechanism of any one of claims 1-13, the mounting method comprises:
sliding the stop arm (211) from an opening of the first accommodation cavity (111) into the first accommodation cavity (111);
pushing the pull ring (2) in an axial direction of the housing seat (1) to enable the stop arm (211) to abut against a side wall of the first accommodating cavity (111); and
squeezing the elastic support (3) inwards, and pressing the elastic support (3) into the first accommodation cavity (111) when it is squeezed until a distance between two ends of the elastic support (3) is smaller than the opening of the first accommodation cavity (111).

15. The mounting method of a side-push-type mounting and dismounting mechanism of claim 14, **characterized in that** the opening (1113) is provided above the first accommodating cavity, and when the elastic support (3) is required to be mounted, the elastic support (3) is compressed, then the elastic support (3) slides into the first accommodation cavity (111) from the opening (1113).

16. The mounting method of a side-push-type mounting and dismounting mechanism of claim 15, **characterized in that** when the elastic support (3) is required to be dismounted, the pull ring (2) is pulled, and the elastic support (3) is compressed, and then the elastic support (3) is taken out from the opening (1113), thereby realizing dismounting of the elastic support (3).

17. The mounting method of a side-push-type mounting and dismounting mechanism of claim 14, **characterized in** further comprising:
providing a photoelectric assembly within a third accommodating cavity (13) of the housing seat (1);
placing a housing cover (4) on the housing seat (1), and inserting a first limiting protrusion (212) at a tail portion of the sliding plate (21) into a first limiting slot (114) of the housing cover (4), and abutting a second limiting protrusion (213) at the tail portion of the sliding plate (21) against a step (1141), so as to complete mounting of the housing cover (4); and
sleeving a metal shielding cage (6) on an outermost periphery after the mounting of the housing cover (4) is completed, so as to realize mounting of the mounting and dismounting mechanism.

18. The mounting method of a side-push-type mounting and dismounting mechanism of claim 14, **characterized in that** when a device inside the side-push-type mounting and dismounting mechanism needs to be maintained, the elastic support is compressed by using the pull ring (2), so that the sliding plate (21) of the pull ring (2) is unlocked from the housing seat (1), and the compressed elastic support (3) is taken out, and then after the stop arm (211) loses the clamping action of the elastic support (3), the pull ring (2) is taken out, thereby realizing the separation of the pull ring (2), the housing seat (1) and the elastic support (3).
